# EUROPÄISCHE PATENTANMELDUNG

(11) **EP 4 796 820 A1**
(43) Veröffentlichungstag der Anmeldung: **26.08.2026**
(21) Anmeldenummer: 25160004.5
(22) Anmeldetag: 25.02.2025
(51) Int. Cl.: F16K 17/16, B65D 90/36

(54) **MITTEL ZUR BEGRENZUNG EINES ÖFFNUNGSWINKELS EINER BERSTSCHEIBE UND BERSTSCHEIBE DAMIT**

(71) Anmelder: Rembe GmbH Safety + Control, 59929 Brilon (DE)
(72) Erfinder: HENKE, Volker, 59929 Brilon (DE); PENNO, Stefan, 59929 Brilon (DE); BLOCHING, Marius, 47877 Willich (DE)
(74) Vertreter: Fritz Patent- und Rechtsanwälte PartmbB

(57) **Zusammenfassung**

Die Erfindung betrifft ein Mittel zur Begrenzung eines Öffnungswinkels einer Berstscheibe (B) mit einer Platte, die
- einen ersten Bereich aufweist, der unter Krafteinwirkung senkrecht zur Ebene der Platte auswölbbar und/oder durchbiegbar ist und
- einen zweiten Bereich aufweist, mit dem die Platte befestigbar ist, wobei
- der zweite Bereich an einem ersten Rand der Platte vorgesehen ist,
- die Platte zwei im Wesentlichen senkrecht zu diesem ersten Rand stehende zweite Ränder aufweist.

## Beschreibung

Die vorliegende Erfindung betrifft ein Mittel zur Begrenzung eines Öffnungswinkels einer Berstscheibe, insbesondere einer Berstscheibe, die aus Blech hergestellt ist, mit Randbereichen, mit denen die Berstscheibe an einer Öffnung eines Behälters oder einer Leitung befestigt werden kann, und mit einem mittleren Bereich, mit dem die Öffnung bis zu einem Berstdruck absperrbar ist, und mit Sollbruchlinien, entlang derer die Berstscheibe bei einem Erreichen des Berstdrucks aufreißt, so dass der mittlere Bereich ganz oder in Teilen öffnet.

Eine solche Berstscheibe ist aus dem Dokument EP 4 477 925 A1 bekannt. Die aus dem Dokument bekannte Berstscheibe ist eckig, insbesondere rechteckig und sie weist in den Randbereichen einen Umschlag auf, der einen ersten, umgeschlagenen Teil des Blechs und einen zweiten Teil des Blechs aufweist, zu dem der umgeschlagene Teil parallel oder überwiegend parallel ist.

Aus dem Dokument EP 2 532 933 B1 ist eine Vorrichtung zur Begrenzung eines Öffnungswinkels der Berstscheibe bekannt, die zusammen mit einer Berstscheibe an einer Öffnung eines Behälters oder einer Leitung befestigt werden kann.

Berstscheiben verschließen im störungsfreien Betrieb einer abzusichernden technischen Einrichtung eine Öffnung in einer Wand, eines Bodens oder einer Decke. Bei einem Überdruck, insbesondere in Folge einer Explosion oder einem Unterdruck birst die Berstscheibe und kann so für einen Druckausgleich zwischen dem Hohlraum in der abzusichernden technischen Einrichtung und der Umgebung dieser technischen Einrichtung sorgen, ohne dass die technische Einrichtung im Übrigen zerstört wird. Der Vorteil von Berstscheiben ist, dass es zu einer Druckentlastung an einer dazu vorgesehenen Stelle der abgesicherten technischen Einrichtung kommt, nämlich an der Stelle, an welcher die Berstscheibe eingebaut ist. An der Stelle, an welcher die Berstscheibe eingebaut ist, kann eine Druckwelle und/oder eine Flamme aus der abgesicherten Einrichtung austreten. Daher muss dafür gesorgt sein, dass der Bereich vor der Berstscheibe frei ist, so dass die Druckwelle und/oder die Flamme keine Schäden an Gegenständen oder Personen anrichten kann. Die Berstscheibe muss daher an einer Stelle der abgesicherten Einrichtung angebracht sein, wo es zu einer ungehinderten Ausbreitung der Druckwelle und/oder Flamme in der Umgebung kommen kann. Damit ist die Auswahl der Stellen der technischen Einrichtung, an denen eine Berstscheibe angebracht werden kann, zum Beispiel durch die Bebauung in der Umgebung beschränkt. Ebenso kann, wenn die mit der Berstscheibe gesicherte Einrichtung bereits vorhanden ist, die Gestaltung der Umgebung nicht ohne Berücksichtigung von der vorhandenen Berstscheibe vorgenommen werden.

Abhilfe kann da eine Vorrichtung oder ein Mittel zur Begrenzung eines Öffnungswinkels einer Berstscheibe schaffen. Durch die Begrenzung des Öffnungswinkels der Berstscheibe kann Einfluss auf die Ausbreitungsrichtung einer Druckwelle und/oder Flamme genommen werden. Mittels der Vorrichtung kann bewirkt werden, dass die Berstscheibe im Entlastungsfall nicht wie üblich um bis zu 180° aus der Ausgangslage geschwenkt wird, sondern um kleinere Winkel geschwenkt wird. Dadurch kann erreicht werden, dass durch die Bestscheibe die Druckwelle und/oder Flamme in eine bevorzugte Richtung gelenkt wird. Damit wird es möglich, die Stelle, an welcher die Berstscheibe angebracht ist, freier zu wählen und die Umgebung der abgesicherten technischen Einrichtung freier zu gestalten.

Vorrichtungen zur Begrenzung des Öffnungswinkels einer Berstscheibe sind aus verschiedenen Dokumenten und auch aus der Praxis bekannt, so zum Beispiel die Vorrichtungen aus den Dokumenten US 6 192 914 B2, DE 202 15 501 U1 und EP 2 532 933 B1 oder das Produkt TARGO-VENT der Anmelderin oder das Produkt VIGISPACE der STIF - Société de Tölerie Industrielle Française.

Die aus dem Dokument US 6 192 914 B2 bekannte Vorrichtung wird an einer Berstscheibe in einer Leitung eingesetzt und wird durch einen Fangriegel ("catcher bar") gebildet. Dieser Fangriegel stützt einen Scharnierbereich der Berstscheibe beim Umschlagen und Aufreißen der Bestscheibe und bremst die Bewegung des mittleren Bereichs ("blow-out portion") der Bestscheibe, beim Umbiegen in das freie Innere eines Rohrstutzens. Das Stützen des Scharnierbereichs und das Bremsen des mittleren Bereichs der Berstscheibe durch den Fangriegel verhindert, dass der mittlere Bereich von dem Rest der Berstscheibe getrennt oder abgerissen wird. Die Funktion des Fangriegels ist es also, auch ein Abtrennen oder Abreißen des mittleren Bereichs der Berstscheibe zu verhindern. Beim Umschlagen und Aufreißen der aus dem Dokument US 6 192 914 B2 bekannten Berstscheibe schlägt der mittlere Bereich an dem Fangriegel an. Der Öffnungswinkel der Berstscheibe wird durch den Fangriegel allenfalls auf 90° begrenzt. Das mag bei einer Entlastung des Überdrucks in einer Rohrleitung ausreichend sein. Bei Anwendungen, bei denen in die Umgebung der abzusichernden Einrichtung entlastet wird, reicht das aber nicht aus.

Die aus dem Dokument DE 202 15 501 U1 bekannte Vorrichtung zur Begrenzung des Öffnungswinkels wird durch seitlich an der Berstscheibe angebrachte, in der Gebrauchsmusterschrift als Faltenbälge bezeichnete Dreiecksstücke gebildet, die aus einem in der Gebrauchsmusterschrift nicht näher spezifizierten flexiblen Material hergestellt sind. Die Dreiecksstücke sind mit einer Kante an einem Rand der Öffnung angebracht, die von der Berstscheibe verschlossen ist. Eine andere Kante ist an einem Rand der Berstscheibe befestigt. Die aus dem Dokument DE 202 15 501 U1 bekannte Vorrichtung hat sich in der Praxis nicht durchgesetzt.

Die aus dem Dokument EP 2 532 933 B1 bekannte Vorrichtung zur Begrenzung des Öffnungswinkels weist eine Platte auf, die einen mittleren Bereich aufweist, die unter Krafteinwirkung senkrecht zur Ebene der Platte auswölbbar und/oder durchbiegbar ist, wobei die Platte auf einander gegenüberliegenden Seiten des mittleren Bereichs Randbereiche aufweist, mit denen die Platte befestigt werden kann, und wobei Randbereiche der Berstscheibe und die Randbereiche der Platte übereinander liegen. Im Falle eines Aufreißens der Berstscheibe drückt der mittlere Bereich der Berstscheibe auf den mittleren Bereich der Platte und wölbt diesen aus. Dadurch kann die Berstscheibe öffnen, aber nicht vollständig umschlagen. Der Öffnungswinkel ist begrenzt.

Das TARGOVENT der Anmelderin ist eine technische Umsetzung der Lehre des Dokumentes EP 2 532 933 B1. Als Platte wird beim TARGOVENT ein flexibles Material verwendet.

Das VIGISPACE von STIF ist ein Fangkorb, der den mittleren Bereich der Berstscheibe auffängt.

Im Gegensatz zu dem VIGSPACE ragen die aus dem Dokument DE 202 15 501 U1, dem Dokument EP 2 532 933 B1 bekannten Mittel oder Vorrichtungen zur Öffnungswinkelbegrenzung und das TARGOVENT nicht wesentlich über die Berstscheibe hinaus. Durch die Mittel oder Vorrichtungen wird kaum zusätzlich Platz in Anspruch genommen. Insbesondere ragen die Vorrichtungen nicht in Verkehrswege, die an den Berstscheiben vorbeiführen. Ebenso können die Berstscheiben mit den Mitteln oder Vorrichtungen zur Öffnungswinkelbegrenzung auch an mobile Einrichtungen verwendet werden, deren Abmessungen dann nicht durch hervorstehende Teile der Mittel oder Vorrichtungen zur Öffnungswinkelbegrenzung vergrößert wird.

Das TARGOVENT der Anmelderin hat sich daher zu einem erfolgreichen Produkt entwickelt, das insbesondere auch zur Nachrüstung von Berstscheiben geeignet ist. Zugleich ist das TARGOVENT auch ein komplexes Produkt, insbesondere auch wegen der Möglichkeit, Berstscheiben damit nachzurüsten.

Hier setzt die vorliegende Erfindung an.

Der vorliegenden Erfindung liegt die Aufgabe zugrunde, ein Mittel vorzuschlagen, das weniger komplex ist als das TARGOVENT, zugleich aber den Vorteil der geringen Abmessungen des TARGOVENT hat.

Diese Aufgabe wird erfindungsgemäß durch ein Mittel mit den Merkmalen des Anspruchs 1 und eine Berstscheibe mit einem solchen Mittel gelöst.

Demnach weist ein erfindungsgemäßes Mittel zur Begrenzung eines Öffnungswinkels einer Berstscheibe eine Platte auf, die
a. einen ersten Bereich aufweist, der unter Krafteinwirkung senkrecht zur Ebene der Platte auswölbbar und/oder durchbiegbar ist und
b. einen zweiten Bereich aufweist, mit dem die Platte befestigbar ist,
c. wobei der zweite Bereich an einem ersten Rand der Platte vorgesehen ist und
d. wobei die Platte zwei im Wesentlichen senkrecht zu diesem ersten Rand stehende zweite Ränder aufweist.

Außerdem kann das erfindungsgemäße Mittel ein Band aufweisen, das sich zwischen den zweiten Rändern und diese übergreifend erstreckt, wobei
a. ein erstes Ende des Bandes und ein zweites Ende des Bandes mit je einem Befestigungselement verbunden ist oder je ein Befestigungselement aufweist, mit denen das Band befestigbar ist, und
b. das Band Elemente das Band Elemente aufweist oder das Band zumindest teilweise aus einem Material gebildet ist, durch die bzw. das eine Länge des Bandes begrenzt verlängerbar ist.

Dieses erfindungsgemäße Mittel kann an einer Außenseite einer insbesondere rechteckigen Berstscheibe befestigt werden. Dazu wird der zweite Bereich an einem ersten Randbereich der Berstscheibe befestigt, entlang dem der mittlere Bereich der Bestscheibe im Druckentlastungsfall geschwenkt wird. Senkrecht angeordnet zu diesem ersten Randbereich weist die Berstscheibe zwei zweite, einander gegenüberliegende Randbereiche auf. Zwischen den zweiten Randbereichen und dem mittleren Bereich der Berstscheibe sind eine oder mehrere Sollbruchlinien vorgesehen. Wenigstens eine weitere Sollbruchlinie ist an einem dritten Randbereich der Berstscheibe vorgesehen, die dem ersten Randbereich der Berstscheibe gegenüberliegt. Entlang dieser Sollbruchlinien reißt die Berstscheibe im Entlastungsfall auf.

So wie der mittlere Bereich der Berstscheibe beim Öffnen der Berstscheibe um diesen ersten Randbereich der Berstscheibe geschwenkt wird, wird der erste Bereich der Platte des erfindungsgemäßen Mittels um den zweiten Bereich der Platte geschwenkt. Je nach dem, wie steif die Platte insbesondere in dem Schwenkbereich ist, wird die Bewegung des mittleren Bereichs der Berstscheibe dadurch gebremst und/oder gedämpft. Durch die Wahl der Eigenschaften der Platte, zum Beispiel der Dicke der Platte, kann die Dämpfung der Bewegung eingestellt werden, wodurch der Öffnungswinkel der Berstscheibe begrenzt ist.

Die Befestigungselemente an den Enden des Bandes des erfindungsgemäßen Mittels sind an zweiten Randbereichen der Berstscheibe befestigt. Der schwenkende erste Bereich der Platte drückt beim Öffnen auf das Band, dessen Enden an den zweiten Randbereichen der Berstscheibe gehalten bleiben. Dadurch, dass das Band verlängerbar ist, kann sich der erste Bereich der Platte und der mittlere Bereich der Berstscheibe auswölben und/oder durchbiegen. Das ermöglicht das Schwenken des mittleren Bereichs der Berstscheibe und des ersten Bereichs der Platte des erfindungsgemäßen Mittels.

Dadurch, dass die Verlängerung des Bandes begrenzt ist, stoppt die Schwenkbewegung, wenn die maximale Länge des Bandes erreicht ist. Dadurch ist dann der Öffnungswinkel der Berstscheibe begrenzt. Eine aus dem mit der Berstscheibe abgesicherten Behälter austretende Strömung wird dadurch in eine durch den Öffnungswinkel der Berstscheibe in eine gewünschte Richtung geleitet.

Ein Material, das eine begrenzte Verlängerung des Bandes ermöglicht, könnte ein flexibles oder dehnbares Material sein.

Es könnte auch sein, dass das Band gewellt ist oder einen Zickzackverlauf hat und es bei bei der begrenzten Verlängerung glatt gezogen wird. Ein so gewellete oder zickzackförmiges Band könnte aus Stahl oder einem Verbundwerkstoff hergestellt sein.

Wenn Elemente zur begrenzten Verlängerung des Bandes vorgesehen sind, kann das Band aus einem festen Material hergestellt sein, das nicht oder allenfalls geringfügig dehnbar ist, wie zum Beispiel Stahl oder einem Verbundwerkstoff, insbesondere einem Faserverbundwerkstoff wie zum Beispiel einem kohlenstofffaserverstärkten Kunststoff.

Es ist möglich, dass die Elemente zur begrenzten Verlängerung des Bandes nur in einem Bereich zwischen dem ersten und dem zweiten Bandende vorgesehen sind. Sie können insbesondere auch nur in einem mittleren Bereich des Bandes angeordnet sein.

Eine Verlängerbarkeit des Bandes lässt sich einfach realisieren, wenn das Band zweitgeteilt ist und ein erstes Bandteil und ein zweites Bandteil aufweist. Insbesondere dann können das erste Bandteil das erste Bandende und das zweite Bandteil das zweite Bandende aufweisen. Insbesondere dann könnten das erste Bandteil einen Teil der Elemente zur begrenzten Verlängerung und das zweite Bandteil einen Teil der Elemente zur begrenzten Verlängerung umfassen.

Sowohl das erste Bandteil als auch das zweite Bandteil können durch die Elemente zur begrenzten Verlängerung verschiebbar zueinander miteinander verbunden sein, wobei die Verschiebbarkeit der beiden Bandteile zueinander auf einen vorgegebenen Weg begrenzt ist.

Zu den Elementen zur begrenzten Verlängerung eines erfindungsgemäßen Mittels können Führungselemente und Anschlagselemente gehören.

So ist es möglich, dass sowohl das erste Bandteil als auch das zweite Bandteil je mindestens ein Führungselement aufweisen, wobei das mindestens eine Führungselement des ersten Bandteils und das mindestens eine Führungselement des zweiten Bandteils zusammen eine Führung bilden, die die Verlängerung ermöglicht.

Sowohl das erste Bandteil als auch das zweite Bandteil eines erfindungsgemäßen Mittels können je mindestens ein Anschlagselement aufweisen. Dabei können das mindestens eine Anschlagselement des ersten Bandteils und das mindestens eine Anschlagselement des zweitens Bandteils füreinander Anschläge bilden, d.h., dass sie aneinander anschlagen können. Die Anschläge können die Verlängerung des Bandes begrenzen.

Das erste Bandteil und das zweite Bandteil können je einen ersten Bereich haben, wobei der erste Bereich des zweiten Bandteils breiter ist als der erste Bereich des ersten Bandteils und der erste Bereich des ersten Bandteils breiter ist als ein zweiter Bereich des zweiten Bandteils.

Dann kann der erste Bereich des ersten Bandteils als das Führungselement oder eines der Führungselemente des ersten Bandteils einen Schlitz haben. Durch diesen Schlitz kann der zweite Bereich des zweiten Bandteils als das Führungselement oder eines der Führungselemente des zweiten Bandteils verschiebbar hindurchgeführt sein.

Alternativ oder zusätzlich kann der erste Bereich des zweiten Bandteils in der Richtung der Verschiebbarkeit liegende Ränder haben. Diese können um in der Richtung der Verschiebbarkeit liegende Ränder des ersten Bereichs des ersten Bandteils herumgebogen sein. So können diese Ränder der beiden Bandteile die Führungselemente oder eines der mehreren Führungselemente der Bandteile bilden.

Eine Begrenzung oder ein Rand des Schlitzes im ersten Bereich des ersten Bandteils kann das Anschlagselement oder eines der mehreren Anschlagselemente des ersten Bandteils bilden. Dann kann ein Absatz oder Vorsprung an dem zweiten Bandteil, insbesondere ein Absatz zwischen dem ersten Bereich des zweiten Bandteils und dem zweiten Bereich des zweiten Bandteils das Anschlagselement oder eines der mehreren Anschlagselemente des zweiten Bandteils bilden.

In der Platte eines erfindungsgemäßen Mittels können in derem ersten Bereich mit Abstand zueinander zwei erste Ausnehmungen vorgesehen sein. Durch diese ersten Ausnehmungen kann das Band von einer ersten Seite zu einer zweiten Seite der Platte geführt sein.

Die Platte eines erfindungsgemäßen Mittels kann im ersten Bereich eine zweite Ausnehmung aufweisen. In dieser Ausnehmung kann die Mitte des Bandes angeordnet sein. Diese zweite Ausnehmung kann eine Einbuchtung im ersten Bereich der Platte sein, die sich von dem dem zweiten Bereich der Platte gegenüberliegenden Rand des ersten Bereichs in Richtung des zweiten Bereichs erstreckt.

Das der Erfindung zugrunde liegende Problem wird auch durch eine Berstscheibe gelöst, die aus Blech hergestellt ist, die Randbereiche hat, mit denen die Berstscheibe an einer Öffnung eines Behälters oder einer Leitung befestigt werden kann, die einen mittleren Bereich hat, mit dem die Öffnung des Behälters oder der Leitung bis zu einem Berstdruck abgesperrt ist, und die Sollbruchlinien hat, entlang derer die Berstscheibe bei einem Erreichen des Berstdruck aufreißt, so dass der mittlere Bereich ganz oder in Teilen öffnet, wobei die Berstscheibe ein erfindungsgemäßes Mittel zur Begrenzung des Öffnungswinkels der Berstscheibe aufweist.

Bei der erfindungsgemäßen Berstscheibe können zumindest einer der Randbereiche oder der mittlere Bereich der Berstscheibe und die Platte des Mittels zur Begrenzung des Öffnungswinkels der Berstscheibe aus einem Stück bestehen.

Weitere Merkmale und Vorteile eines Ausführungsbeispiels der Erfindung werden unter Bezugnahme auf die Zeichnungen nachfolgend beschrieben. Es zeigt:
- Fig. 1: eine perspektivische Ansicht einer erfindungsgemäßen Berstscheibe mit einem erfindungsgemäßen Mittel zur Begrenzung des Öffnungswinkels der Berstscheibe,
- Fig. 2: eine Draufsicht auf diese Berstscheibe,
- Fig. 3: eine Draufsicht auf die Berstscheibe ohne ein Band des Mittels zur Begrenzung des Öffnungswinkels,
- Fig. 4: eine Draufsicht auf das Band des Mittels zur Begrenzung des Öffnungswinkels,
- Fig. 5: eine Detailansicht einer Mitte des Bands des Mittels zur Begrenzung des Öffnungswinkels,
- Fig. 6: ein Detail eines ersten Bandteils in perspektivischer Ansicht,
- Fig. 7: ein Detail eines zweiten Bandteils des Bandes in perspektivischer Darstellung und
- Fig 8: eine Band einer Variante der Berstscheibe nach den Fig. 1 bis 7.

Es ist nicht notwendig, dass eine erfindungsgemäße Berstscheibe B oder ein erfindungsgemäßes Mittel alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

Die erfindungsgemäße Berstscheibe ist aus drei Blechstücken 1, 2, 3 hergestellt. Das größte Blechstück 1 bildet die Randbereiche 11, 12, 13 der Berstscheibe B, einen mittleren Bereich 14 der Berstscheibe B und die Platte 15 eines Mittels zur Begrenzung des Öffnungswinkels der Berstscheibe B, das ein Teil der Berstscheibe B ist.

Die beiden anderen, kleineren Blechstücke 2, 3 bilden ein erstes bzw. zweites Bandteil 2, 3, die zusammen ein Band 2, 3 des Mittels zur Begrenzung des Öffnungswinkels der Berstscheibe B bilden.

Der mittlere Bereich 14 des größten Blechstückes bzw. der Berstscheibe B ist rechteckig. An den mittleren Bereich 14 schließt sich an jeder Seite ein Randbereich 11, 12, 13 an. Entlang einer Linie zwischen einem ersten der Randbereiche 11, 12, 13 und dem mittleren Bereich 14 der Berstscheibe wird der mittlere Bereich 14 geschwenkt, wenn die Berstscheibe B öffnet. An dazu senkrecht stehenden Rändern des mittleren Bereichs 14 sind einander gegenüberliegend zweite Randbereiche 12 vorgesehen. Diese sind durch Sollbruchlinien von dem mittleren Bereich 14 getrennt. Dem ersten Randbereich 11 gegenüber liegt ein dritter Randbereich 14. Auch dieser ist von dem mittleren Bereich 14 durch eine Sollbruchlinie getrennt.

Das größte Blechstück 1 weist in den zweiten und dritten Randbereichen 12, 13 einen Umschlag auf. Dieser Umschlag hat einen ersten, umgeschlagenen Teil des Blechstücks 1 und einen zweiten Teil des Blechstücks, zu dem der umgeschlagene Teil parallel oder überwiegend parallel ist und mit dem mittleren Bereich 14 verbunden ist. Der erste, umgeschlagene Teil des Blechstücks 1 reicht bis an den mittleren Bereich 14 heran oder überlappt sogar ein wenig mit dem mittleren Bereich 14, das heißt, dass er über die Sollbruchlinie zwischen dem zweiten, nicht umgeschlagenen Teil und dem mittleren Bereich 14 ragt.

Das größte Blechstück 1 weist auch im ersten Randbereich 11 einen Umschlag auf. Auch dieser Umschlag hat einen ersten, umgeschlagenen Teil 15 des Blechs und einen zweiten Teil des Blechs, zu dem der umgeschlagene Teil parallel oder überwiegend parallel ist und der im Wesentlichen von dem mittleren Bereich 14 gebildet ist. Der erste umgeschlagene Teil 15 des Blechs ist aber deutlich länger als die ersten, umgeschlagenen Teile der Umschläge der anderen Randbereiche 12, 13. Dieser ragt zum Teil deutlich über die Mitte zwischen dem ersten Randbereich 11 und dem dritten Randbereich 13 hinaus. Dieser erste umgeschlagene Teil 15 des Umschlags im ersten Randbereich der Berstscheibe bildet die Platte 15 des Mittels zur Begrenzung des Öffnungswinkels der Berstscheibe B. Davon bildet der den mittleren Bereich 14 der Berstscheibe B überlappende Teil der Platte 15 den ersten Teil 151 der Platte 15, der beim Öffnen der Platte 15 unter der Einwirkung der beim Öffnen der Berstscheibe B senkrecht zur Ebene der Platte 15 wirkenden Kraft ausgewölbt und/oder durchgebogen wird. Der zweite Bereich 152 der Platte wird durch den ersten, umgeschlagenen Teil des Umschlags im ersten Randbereich 11 gebildet.

In den Randbereichen 11, 12, 13 sind Löcher 16 vorgesehen, durch die Schrauben geführt werden können, mit denen die Berstscheibe B an dem abzusichernden Behälter oder der abzusichernden Leitung befestigt werden kann.

Die beiden das erste bzw. zweite Bandstück 2, 3 des Bands 2, 3 bildenden kleineren Blechstücke 2, 3, der Berstscheibe B weisen jeweils an einem äußeren Ende ein Befestigungselement 23, 33 auf. Diese Befestigungselemente 23, 33 weisen je zwei Löcher auf, die zu je zwei Löchern in den zweiten Randbereichen 12 fluchten. Die Bandteile 2, 3 können so zusammen mit dem größten Blechstück 1 der Berstscheibe an den abzusichernden Behälter oder die abzusichernde Leitung angeschraubt werden.

Von den Befestigungselementen 23, 33 erstrecken sich die Bandteile 2, 3 nach innen, zum jeweils gegenüberliegenden zweiten Randbereich 12. Sie reichen über die Mitte zwischen den zweiten Randbereichen 12 hinaus und die Enden sind so miteinander verbunden, dass diese sich zueinander verschieben können. Dadurch kann das Band 2, 3 verlängert werden und einem Auswölben und/oder Durchbiegen des ersten Bereichs 151 der Platte 15 bzw. des mittleren Bereichs 14 der Berstscheibe B folgen. Die Verschiebung der Enden der beiden Bandteile 2, 3 ist aber nur begrenzt möglich. Anschläge 211, 34 an den Enden der Bandteile 2, 3 stellen sicher, dass die Enden der Bandteile 2, 3 nur um einen bestimmten Weg zueinander verschoben werden können.

Zur Führung der Enden der beiden Bandteile 2, 3 sind an den Enden Führungselemente vorgesehen. Zur Begrenzung der Verschiebung der Enden zueinander und damit zu Begrenzung der Verlängerung des Bandes ist an den Enden jedes Bandteils ein Anschlagselement vorgesehen.

Das erste Bandteil 2 und das zweite Bandteil 3 weisen je einen ersten Bereich 21, 31 auf, der an dem Ende des ersten bzw. zweiten Bandteils 2, 3 liegt, das mit dem anderen Bandteil 2, 3 verbunden ist. Zwischen dem ersten Bereich 21, 31 und dem Befestigungselement 23, 33 ist bei jedem der beiden Bandteile 2, 3 ein zweiter Bereich 22, 32 vorgesehen. Der erste Bereich 21, 31 der beiden Bandteile 2, 3 ist breiter als der zweite Bereich 22, 32 des jeweils gleichen Bandteils 2, 3.

Außerdem ist der erste Bereich 31 des zweiten Bandteils 3 breiter als der erste Bereich 21 des ersten Bandteils 2 und der erste Bereich 21 des ersten Bandteils 2 ist breiter als ein zweiter Bereich 32 des zweiten Bandteils 3.

Der erste Bereich 21 des ersten Bandteils 2 hat als ein erstes von zwei Führungselementen des ersten Bandteils 2 einen Schlitz 212. Durch diesen Schlitz 212 ist der zweite Bereich 32 des zweiten Bandteils 3 hindurchgeführt. Dieser zweite Bereich 32 ist eines von zwei Führungselementen des zweiten Bandteils 3. Der zweite Bereich 32 ist in dem Schlitz 212 verschiebbar geführt.

Außerdem hat der erste Bereich 32 des zweiten Bandteils 3 in der Richtung der Verschiebbarkeit liegende Ränder 311. Diese sind um in der Richtung der Verschiebbarkeit liegende Ränder 213 des ersten Bereichs 21 des ersten Bandteils 2 herumgeschlagen und fassen diese so ein. So bilden diese Ränder 311, 213 der beiden Bandteile 2, 3 jeweils zweite Führungselemente der Bandteile 2, 3.

Eine Begrenzung oder ein Rand 211 des Schlitzes 212 im ersten Bereich 21 des ersten Bandteils 2 bildet das Anschlagselement des ersten Bandteils 2. Ein Absatz 34 zwischen dem ersten Bereich 31 des zweiten Bandteils 3 und dem zweiten Bereich 32 des zweiten Bandteils 3 bildet das Anschlagselement des zweiten Bandteils 2. Bei einem Auswölben und/oder Durchbiegen des ersten Bereichs 151 der Platte 15 bzw. des mittleren Bereichs 14 der Berstscheibe B schlagen die beiden Anschlagselemente aneinander an und Begrenzen so die Bewegung der Enden der Bandteile 2, 3 zueinander und die Verlängerung des Bandes 2, 3.

Damit der erste Bereich 151 bei einem Auswölben und/oder Durchbiegen des ersten Bereichs 151 der Platte 15 bzw. des mittleren Bereichs 14 der Berstscheibe B nicht unter dem sich verlängernden Band 2, 3 durchrutscht, sind in dem ersten Bereich 151 der Platte 15 zwei Löcher 16 vorgesehen, durch die das Band 2, 3 von der Vorderseite auf die Rückseite der Platte 15 geführt ist. Durch die Löcher 16 sind die zweiten Bereiche 22, 32 der Bandteile 2 3 geführt. Der Rand des ersten Bereichs 151 der Platte 15 hat in Richtung zu dem zweiten Bereich 152 der Platte 15 eine Einbuchtung 17. Diese Einbuchtung 17 gibt die zueinander verschiebbaren zweiten Bereiche der Bandteile 2, 3 frei und verhindert, dass diese zwischen dem ersten Bereich der Platte 15 und dem mittleren Bereich 14 der Berstscheibe B eingeklemmt sind, was die Bewegung der beiden Bandteile 2, 3 zueinander beeinträchtigen könnte.

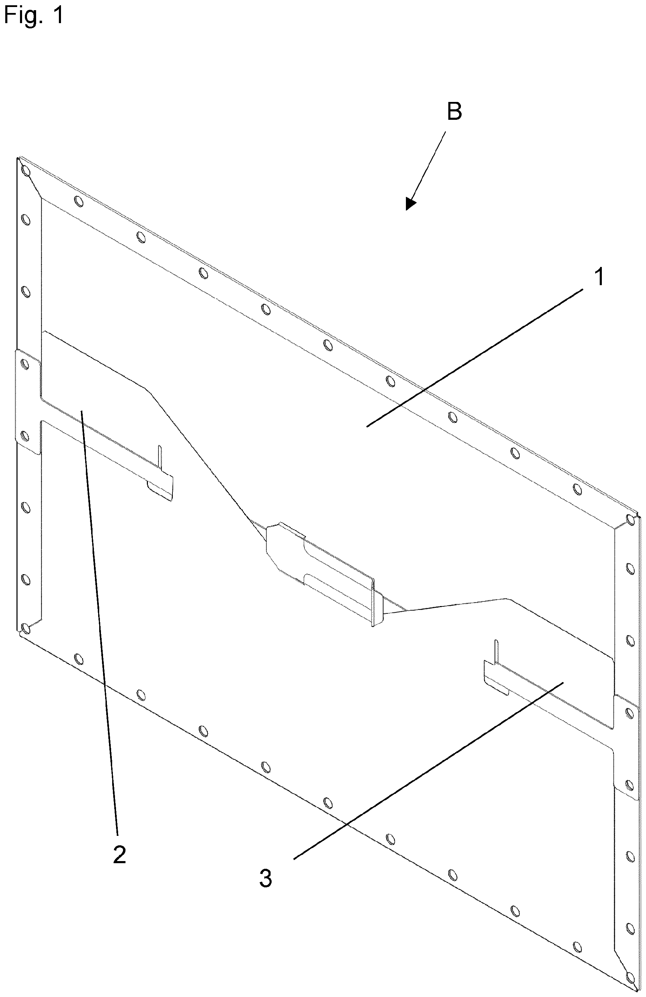

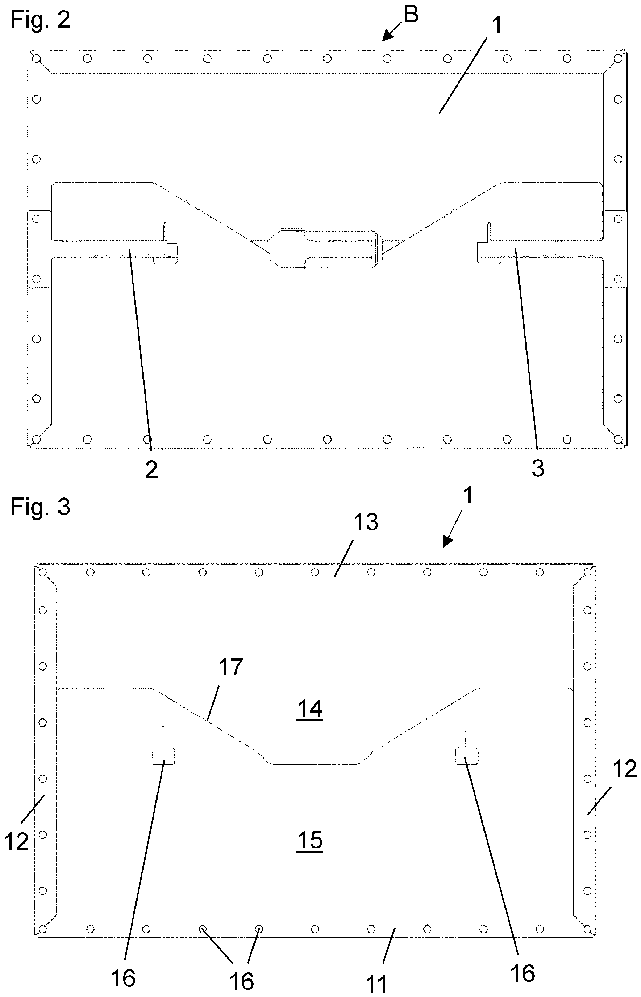

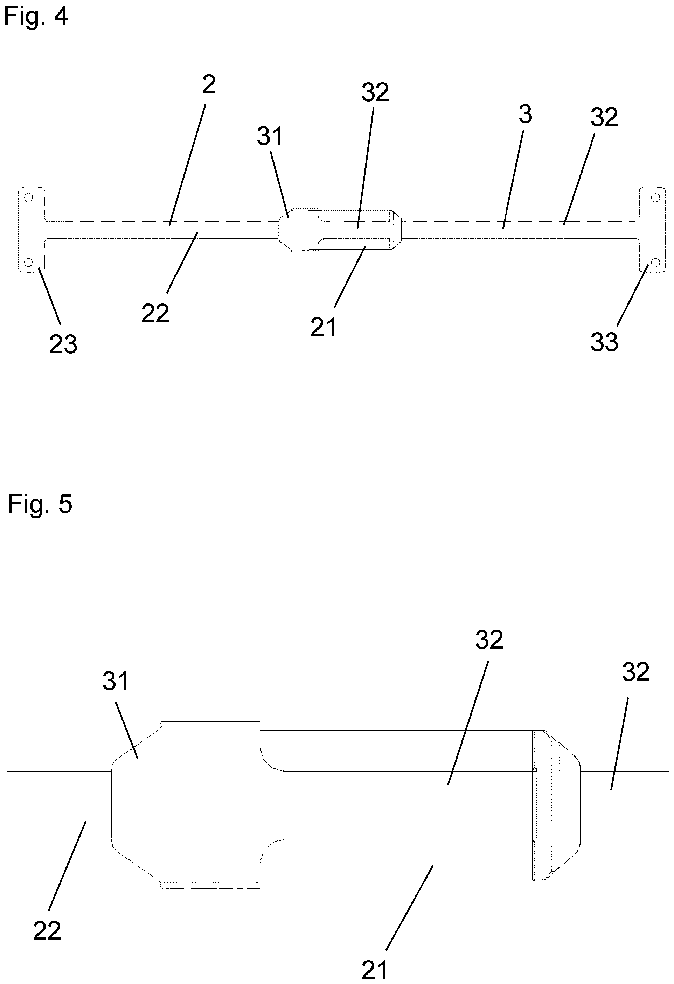

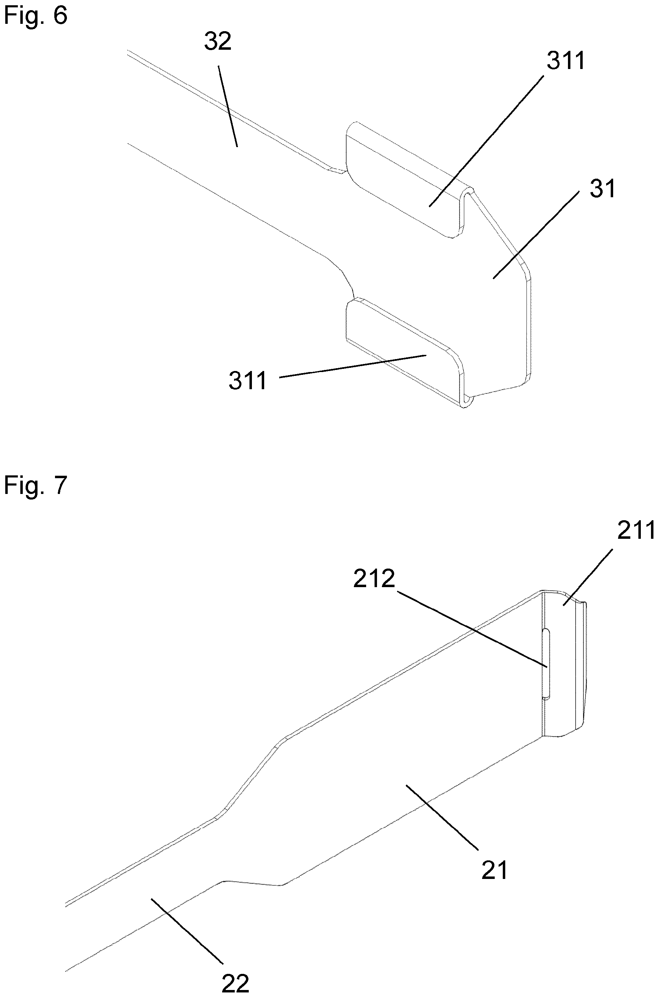

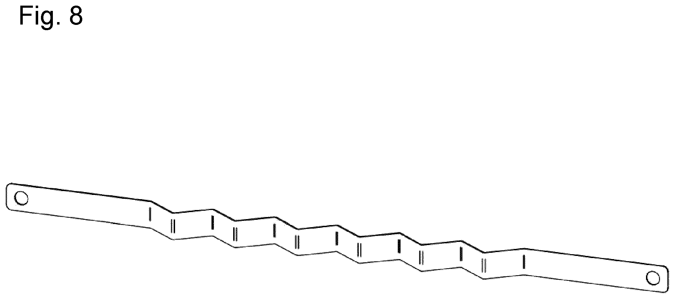

Das in der Fig. 8 dargestellte Band könnte anstelle des in den Fig. 1,2, 4 bis 7 dargestellten Bands Teil einer erfindungsgemäßen Berstscheibe sein. Das Band hat einen zickzackförmigen verlauf. Durch die beim Öffnen der Berstscheibe auf das Band wirkende Kraft wird das Band gedehnt und glatt gezogen. Dadurch ist eine begrenzte Verlängerung des Bands möglich.

## Patentansprüche

1. Mittel zur Begrenzung eines Öffnungswinkels einer Berstscheibe (B) mit einer Platte (15), die
- einen ersten Bereich (151) aufweist, der unter Krafteinwirkung senkrecht zur Ebene der Platte (15) auswölbbar und/oder durchbiegbar ist und
- einen zweiten Bereich (152) aufweist, mit dem die Platte (15) befestigbar ist,
**dadurch gekennzeichnet,**
- **dass** der zweite Bereich (152) an einem ersten Rand der Platte (15) vorgesehen ist,
- **dass** die Platte (15) zwei im Wesentlichen senkrecht zu diesem ersten Rand stehende zweite Ränder aufweist,

2. Mittel nach Anspruch 1, **dadurch gekennzeichnet,**
- **dass** das Mittel ein Band (2, 3) aufweist, das sich zwischen den zweiten Rändern und diese übergreifend erstreckt,
- **dass** ein erstes Ende des Bandes (2, 3) und ein zweites Ende des Bandes (2, 3) mit je einem Befestigungselement verbunden ist oder je ein Befestigungselement (23, 33) aufweist, mit denen das Band (2, 3) befestigbar ist,
- **dass** das Band (2, 3) Elemente aufweist oder das Band (2, 3) zumindest teilweise aus einem Material gebildet ist, durch die bzw. das eine Länge des Bandes (2, 3) begrenzt verlängerbar ist.

3. Mittel nach Anspruch 2, **dadurch gekennzeichnet, dass** die Elemente zur begrenzten Verlängerung des Bandes (2, 3) in einem Bereich zwischen dem ersten und dem zweiten Bandende vorgesehen sind.

4. Mittel nach Anspruch 2 oder 3, **dadurch gekennzeichnet, dass** das Band (2, 3) zweitgeteilt ist und ein erste Bandteil (2) und ein zweites Bandteil (3) aufweist.

5. Mittel nach Anspruch 4, **dadurch gekennzeichnet, dass** das erste Bandteil (2) das erste Bandende und das zweite Bandteil (3) das zweite Bandende aufweist.

6. Mittel nach Anspruch 5, **dadurch gekennzeichnet, dass** das erste Bandteil (2) einen Teil der Elemente zur begrenzten Verlängerung und das zweite Bandteil (3) einen Teil der Elemente zur begrenzten Verlängerung umfasst.

7. Mittel nach Anspruch 6, **dadurch gekennzeichnet, dass** das erste Bandteil (2) und das zweite Bandteil (3) durch die Elemente zur begrenzten Verlängerung begrenzt auf einen vorgegebenen Weg verschiebbar zueinander miteinander verbunden sind.

8. Mittel nach einem der Ansprüche 1 bis 7, **dadurch gekennzeichnet, dass** Führungselemente und Anschlagselemente zu den Elementen zur begrenzten Verlängerung gehören.

9. Mittel nach Anspruch 7 und 8, **dadurch gekennzeichnet, dass** das erste Bandteil (2) und das zweite Bandteil (3) je mindestens ein Führungselement aufweisen, wobei das mindestens eine Führungselement des ersten Bandteils und das mindestens eine Führungselement des zweiten Bandteils zusammen eine Führung bilden, die die Verlängerung ermöglicht.

10. Mittel nach Anspruch 8 oder 9, **dadurch gekennzeichnet, dass** das erste Bandteil (2) und das zweite Bandteil (3) je mindestens ein Anschlagselement aufweisen, wobei das mindestens eine Anschlagselement des ersten Bandteils und das mindestens eine Anschlagselement des zweitens Bandteils füreinander Anschläge bilden, die die Verlängerung des Bandes (2, 3) begrenzen.

11. Mittel nach einem der Ansprüche 2 bis 10, **dadurch gekennzeichnet, dass** das erste Bandteil (2) und das zweite Bandteil (3) je einen ersten Bereich (21, 31) hat, wobei der erste Bereich (31) des zweiten Bandteils (3) breiter ist als der erste Bereich (21) des ersten Bandteils (2) und der erste Bereich (21) des ersten Bandteil breiter ist als ein zweiter Bereich (32) des zweiten Bandteils (3).

12. Mittel nach Anspruch 9 und 11, **dadurch gekennzeichnet, dass** der erste Bereich (21) des ersten Bandteils (2) als das Führungselement oder eines der Führungselemente des ersten Bandteils einen Schlitz (212) hat, durch den der zweite Bereich (32) des zweiten Bandteils (3) als das Führungselement oder eines der Führungselemente des zweiten Bandteils (3) verschiebbar hindurchgeführt ist.

13. Mittel nach Anspruch 9 und 11 oder 12, **dadurch gekennzeichnet, dass** der zweite Bereich (32) des zweiten Bandteils (3) in der Richtung der Verschiebbarkeit liegende Ränder (311) hat, die um in der Richtung der Verschiebbarkeit liegende Ränder (213) des ersten Bereichs (21) des ersten Bandteils (2) herumgebogen sind, wobei diese Ränder (213, 311) der beiden Bandteile (2, 3) die Führungselemente oder eines der mehreren Führungselemente der Bandteile (2, 3) bilden.

14. Mittel nach Anspruch 10 und 11, **dadurch gekennzeichnet, dass**
- eine Begrenzung des Schlitzes (211) im ersten Bereich (21) des ersten Bandteils (2) das Anschlagselement oder eines der mehreren Anschlagselemente des ersten Bandteils (2) bildet und
- ein Absatz (34) zwischen dem ersten Bereich (31) des zweiten Bandteils (3) und dem zweiten Bereich (32) der zweiten Bandteils (3) das Anschlagselement oder eines der mehreren Anschlagselemente des zweiten Bandteils (3) bildet.

15. Mittel nach einem der Ansprüche 2 bis 14, **dadurch gekennzeichnet, dass** in der Platte (15) im ersten Bereich (151) mit Abstand zueinander zwei erste Ausnehmungen (16) vorgesehen sind, durch die das Band (2, 3) von einer ersten Seite zu einer zweiten Seite der Platte (15) geführt ist.

16. Mittel nach einem der Ansprüche 2 bis 14, **dadurch gekennzeichnet, dass** die Platte (15) im ersten Bereich (151) eine zweite Ausnehmung oder Einbuchtung (17) hat, in welcher die Mitte des Bandes (2, 3) angeordnet ist.

17. Berstscheibe (B) die aus Blech hergestellt ist, mit Randbereichen, mit denen die Berstscheibe (B) an einer Öffnung eines Behälters oder einer Leitung befestigt werden kann, und mit einem mittleren Bereich (14), mit dem die Öffnung bis zu einem Berstdruck absperrbar ist, und mit Sollbruchlinien, entlang derer die Berstscheibe (B) bei einem Erreichen des Berstdruck aufreißt, so dass der mittlere Bereich (14) ganz oder in Teilen öffnet,
**dadurch gekennzeichnet, dass**
die Berstscheibe (B) ein Mittel zur Begrenzung eines Öffnungswinkels einer Berstscheibe nach einem der Ansprüche 1 bis 16 aufweist.

18. Berstscheibe nach Anspruch 17, **dadurch gekennzeichnet, dass** zumindest einer der Randbereiche (11, 12, 13) und/oder der mittlere Bereich (14) der Berstscheibe (B) und die Platte (15) des Mittels zur Begrenzung des Öffnungswinkels der Berstscheibe aus einem Stück bestehen.
